# EUROPÄISCHE PATENTSCHRIFT

(11) **EP 3 888 841 B1**
(45) Veröffentlichungstag und Bekanntmachung des Hinweises auf die Patenterteilung: **19.11.2025**
(21) Anmeldenummer: 21161719.6
(22) Anmeldetag: 10.03.2021
(51) Int. Cl.: B23K 37/02, B23K 37/04, B23K 37/047, B23K 26/38, B23K 26/70, B23K 26/08

(54) **VERFAHREN UND MASCHINELLE ANORDNUNG ZUM TRENNENDEN BEARBEITEN EINES PLATTENARTIGEN WERKSTÜCKS, UND ENTSPRECHENDEN COMPUTERPROGRAMM**
METHOD AND MACHINE ASSEMBLY FOR SEPARATION OF A PLATE-SHAPED WORKPIECE, AND CORRESPONDING COMPUTER PROGRAMM
PROCÉDÉ ET AGENCEMENT AUTOMATIQUE DE SÉPARATION D'UNE PIÈCE EN FORME DE PLAQUE, ET PROGRAMME D'ORDINATEUR CORRESPONDANT

(30) Priorität: 25.03.2020 DE 102020108180
(43) Veröffentlichungstag der Anmeldung: 06.10.2021
(73) Patentinhaber: TRUMPF Werkzeugmaschinen SE + Co. KG, 71254 Ditzingen (DE)
(72) Erfinder: Hultsch, Andreas, 01904 Neukirch (DE); Knobel, Carsten, 02681 Wilthen (DE); Gnauck, Konrad, 01904 Neukirch (DE); Wowtscherk, Patrick, 02699 Neschwitz (DE); Sjödin, Niclas, 02625 Bautzen (DE)
(74) Vertreter: Kohler Schmid Möbus Patentanwälte

(56) Entgegenhaltungen:
- EP-A1- 2 008 752
- EP-A1- 2 818 271
- EP-A1- 3 156 175
- DE-A1- 102018 102 589

## Beschreibung

Die Erfindung betrifft ein Verfahren zum trennenden Bearbeiten eines plattenartigen Werkstücks, insbesondere eines Blechs, mittels eines Trennstrahls,
- wobei das Werkstück bei der trennenden Bearbeitung mittels eines Werkstückträgers gelagert wird,
- wobei der Trennstrahl unter trennender Bearbeitung des Werkstücks in einer senkrecht zu einer Hauptebene des Werkstücks verlaufenden Strahlrichtung auf das von dem Werkstückträger gelagerte Werkstück gerichtet wird,
- wobei das Werkstück und der auf das Werkstück gerichtete Trennstrahl relativ zueinander senkrecht zu der Strahlrichtung des Trennstrahls längs einer Vorschubachse über eine Bearbeitungslänge bewegt werden und dadurch unter trennender Bearbeitung des Werkstücks mittels des Trennstrahls an dem Werkstück ein Trennspalt erzeugt wird, der längs der Vorschubachse über die Bearbeitungslänge verläuft und
- wobei der Trennstrahl unter trennender Bearbeitung des Werkstücks über eine durch eine maximale Arbeitslänge begrenzte Arbeitslänge relativ zu dem das Werkstück lagernden Werkstückträger mit einer aktiven Arbeitsbewegung längs der Vorschubachse bewegt wird.

Die Erfindung betrifft des Weiteren eine maschinelle Anordnung zum trennenden Bearbeiten eines plattenartigen Werkstücks, insbesondere eines Blechs, mittels eines Trennstrahls,
- mit einem Werkstückträger zur Lagerung des Werkstücks bei der trennenden Bearbeitung,
- mit einer Bearbeitungsmaschine mit einer Trenneinheit, mittels derer der Trennstrahl unter trennender Bearbeitung des Werkstücks in einer senkrecht zu einer Hauptebene des Werkstücks verlaufenden Strahlrichtung auf das von dem Werkstückträger gelagerte Werkstück richtbar ist,
- mit einem motorischen Vorschubantrieb, mittels dessen der das Werkstück lagernde Werkstückträger und die den Trennstrahl auf das Werkstück richtende Trenneinheit relativ zueinander senkrecht zu der Strahlrichtung des Trennstrahls längs einer Vorschubachse bewegbar sind und dadurch unter trennender Bearbeitung des Werkstücks mittels des Trennstrahls an dem Werkstück ein Trennspalt erzeugbar ist, der längs der Vorschubachse über eine Bearbeitungslänge verläuft,
- wobei der motorische Vorschubantrieb einen motorischen Trenneinheit-Vorschubantrieb aufweist, mittels derer die den Trennstrahl auf das Werkstück richtende Trenneinheit relativ zu dem das Werkstück lagernden Werkstückträger längs der Vorschubachse mit einer aktiven Trenneinheit-Längsbewegung begrenzt bewegbar ist und dadurch der Trennstrahl unter trennender Bearbeitung des Werkstücks über eine durch eine maximale Arbeitslänge begrenzte Arbeitslänge relativ zu dem das Werkstück lagernden Werkstückträger mit einer aktiven Arbeitsbewegung längs der Vorschubachse bewegbar ist.

Die Erfindung betrifft außerdem ein Computerprogramm zum Betreiben einer maschinellen Anordnung der vorgenannten Art.

Gattungsgemäßer Stand der Technik ist bekannt aus EP 3 560 652 A1. Dieses Dokument betrifft ebenso wie die vorliegende Erfindung ein Verfahren und eine Vorrichtung zur Überformatbearbeitung.

Im Falle des gattungsgemäßen Standes der Technik werden an einer Bearbeitungsmaschine mittels eines von einem Schneidkopf der Bearbeitungsmaschine emittierten Schneidstrahls Werkstücke aus einem plattenförmigen Material ausgeschnitten. Zu diesem Zweck wird das plattenförmige Material in einer linearen Transportrichtung in einen Arbeitsbereich der Bearbeitungsmaschine bewegt, in welchem der Schneidkopf relativ zu dem stationären plattenförmigen Material zweiachsig verfährt und der von dem Schneidkopf emittierte Schneidstrahl an dem stationären plattenförmigen Material eine trennende Bearbeitung vornimmt. In der Transportrichtung besitzt das zu bearbeitende plattenförmige Material ein Übermaß gegenüber dem Arbeitsbereich der Bearbeitungsmaschine. Beim Ausschneiden von Werkstücken mit einem Überformat, das heißt von Werkstücken, deren Erstreckung in der Transportrichtung größer ist als die Erstreckung des Arbeitsbereichs der Bearbeitungsmaschine in der Transportrichtung, wird die Werkstückkontur in der Transportrichtung abschnittweise über Teillängen freigeschnitten, die maximal der Erstreckung des Arbeitsbereichs der Bearbeitungsmaschine in der Transportrichtung entsprechen. Nach der trennenden Bearbeitung einer Teillänge der Werkstückkontur wird das plattenförmige Material bei abgeschaltetem Schneidstrahl mit dem noch unbearbeiteten Teil in der Transportrichtung in den Arbeitsbereich der Bearbeitungsmaschine nachgesetzt, ehe das dann wieder stationäre plattenförmige Material mittels des Schneidstrahls über die sich an die freigeschnittene Teillänge der Werkstückkontur in der Transportrichtung anschließende Teillänge trennend bearbeitet wird. Aufgrund der temporären Unterbrechung des Schneidprozesses können sich an dem überformatigen Werkstück in dem Übergangsbereich zwischen einander benachbarten Teillängen der Werkstückkontur Unstetigkeitsstellen, sogenannte "Nachsetzmarken", ausbilden. Weiterer gattungsgemäßer Stand der Technik ist offenbart in DE 10 2018 102 589 A1 (offenbarend den Oberbegriff der Ansprüche 1 und 8). Dieses Dokument betrifft eine maschinelle Anordnung zum Bearbeiten eines Werkstücks mit einer Antriebsanordnung zum Bewegen eines Werkstücks. Dabei führt ein von einem Laserschneidkopf emittierter Trennstrahl eine Arbeitsbewegung senkrecht zu einer Arbeitsbewegung eines ein Werkstück lagernden Werkstückträgers aus.

Eine Verbesserung der Bearbeitungsqualität bei der trennenden Überformatbearbeitung ist ausgehend von dem gattungsgemäßen Stand der Technik die Aufgabe der vorliegenden Erfindung.

Erfindungsgemäß gelöst wird diese Aufgabe durch das Bearbeitungsverfahren gemäß Patentanspruch 1, durch die maschinelle Anordnung gemäß Patentanspruch 8 und durch das Computerprogramm gemäß Patentanspruch 13.

Im Falle der Erfindung können aufgrund der gegenseitigen Überlagerung einer aktiven Arbeitsbewegung des Trennstrahls beziehungsweise der Trenneinheit längs der Vorschubachse und einer gegenläufigen aktiven Arbeitsbewegung des das zu bearbeitende Werkstück lagernden Werkstückträgers längs der Vorschubachse auch Konturen, die längs der Vorschubachse die maximale Arbeitslänge und somit die Reichweite des Trennstrahls beziehungsweise der Trenneinheit übersteigen, kontinuierlich und somit ohne Unterbrechung des Trennprozesses erstellt werden. Nachsetzmarken an den längs der Vorschubachse verlaufenden Kanten von bei der trennenden Werkstückbearbeitung erstellten überformatigen Werkstückteilen werden dadurch vermieden. Eine hervorragende Bearbeitungsqualität bei der Überformatbearbeitung ist erfindungsgemäß ungeachtet der begrenzten Reichweite des Trennstrahls beziehungsweise der Trenneinheit und folglich auch bei einer verhältnismäßig kleinen Baulänge der erfindungsgemäßen Bearbeitungsmaschine gewährleistet.

Eine Richtungsumkehr der aktiven Arbeitsbewegungen von Trennstrahl beziehungsweise Trenneinheit und Werkstückträger ist in bevorzugter Ausgestaltung der Erfindung durch eine entsprechende Umsteuerung der betreffenden Vorschubantriebe möglich.

In Abhängigkeit von der konkreten Bearbeitungsaufgabe kann der Trennstrahl eine aktive Arbeitsbewegung über die maximale Zustelllänge oder über eine Zustelllänge ausführen, die kleiner ist als die maximale Zustelllänge. Aufgrund der verglichen mit der Dynamik des Werkstückträgers in der Regel deutlich höheren Dynamik der Trenneinheit ist es insbesondere im Interesse einer schnellen Werkstückbearbeitung von Vorteil, die Zustelllänge des Trennstrahls längs der Vorschubachse maximal zu nutzen.

Die aktive Arbeitsbewegung des Werkstückträgers kann der aktiven Arbeitsbewegung des Trennstrahls beziehungsweise der die aktive Arbeitsbewegung des Trennstrahls erzeugenden aktiven Trenneinheit-Längsbewegung während der gesamten oder nur während eines Teils der aktiven Arbeitsbewegung des Trennstrahls überlagert werden.

Die trennende Werkstückbearbeitung kann im Falle der Erfindung mit verschiedenartigen Trennstrahlen durchgeführt werden. Als erfindungsgemäßer Trennstrahl denkbar sind beispielsweise ein Hochdruckwasserstrahl oder ein thermischer Trennstrahl wie etwa ein Plasmastrahl oder ein Laser-Trennstrahl. Erfindungsgemäß bevorzugt werden ein Laser-Trennstrahl und als Bearbeitungsmaschine dementsprechend eine Laser-Bearbeitungsmaschine mit einem Laserschneidkopf als Trenneinheit.

Eine bevorzugte Bauart der erfindungsgemäßen maschinellen Anordnung ist dadurch gekennzeichnet, dass der motorische Trenneinheit-Vorschubantrieb als Zahnstangenantrieb ausgebildet ist und/oder dass der motorische Werkstückträger-Vorschubantrieb als Triebstockantrieb ausgebildet ist und/oder dass der motorische Trenneinheit-Querantrieb als Linearantrieb ausgebildet ist.

Bei der Antriebssteuerung der erfindungsgemäßen maschinellen Anordnung handelt es sich insbesondere um eine programmierbare numerische Steuerung.

Eine Automatisierung des erfindungsgemäßen Bearbeitungsverfahrens und der erfindungsgemäßen maschinellen Anordnung wird mittels des erfindungsgemäßen Computerprogramms realisiert. Das erfindungsgemäße Computerprogramm läuft auf der Antriebssteuerung der erfindungsgemäßen maschinellen Anordnung ab, wobei die motorischen Vorschubantriebe und gegebenenfalls auch der motorische Trenneinheit-Querantrieb der maschinellen Anordnung durch die Antriebssteuerung in adäquater Weise gesteuert werden.

Das erfindungsgemäße Computerprogramm wird abgestimmt auf den jeweiligen Anwendungsfall erstellt. Dabei eingesetzt wird ein Computerprogrammprodukt, welches den Anwender insbesondere in die Lage versetzt, das Computerprogramm zur anwendungsbezogenen Steuerung des erfindungsgemäßen Bearbeitungsverfahrens und der erfindungsgemäßen maschinellen Anordnung vor Ort zu generieren.

Besondere Ausführungsarten des Bearbeitungsverfahrens gemäß Patentanspruch 1 und der maschinellen Anordnung gemäß Patentanspruch 8 ergeben sich aus den abhängigen Patentansprüchen 2 bis 7 und 9 bis 12.

Ausweislich der Patentansprüche 2 und 9 werden trennende Bearbeitungen, deren Bearbeitungslänge die maximale Arbeitslänge des Trennstrahls beziehungsweise der Trenneinheit längs der Vorschubachse nicht übersteigt, in bevorzugter Ausgestaltung der Erfindung ausschließlich unter Bewegung des Trennstrahls und somit bei längs der Vorschubachse stationärem Werkstückträger durchgeführt. Von Vorteil ist dieses Erfindungsmerkmal insbesondere angesichts der vorstehend bereits erwähnten Unterschiede zwischen der Dynamik der aktiven Arbeitsbewegung des Trennstrahls und der Dynamik der aktiven Arbeitsbewegung des Werkstückträgers.

Entsprechende Vorteile ergeben sich in Weiterbildung der Erfindung dadurch, dass eine trennende Werkstückbearbeitung senkrecht zu der Vorschubachse ausschließlich durch den eine aktive Arbeitsbewegung senkrecht zu der Vorschubachse ausführenden Trennstrahl durchgeführt wird (Patentansprüche 3, 11). Aufgrund der erfindungsgemäß bestehenden Beweglichkeit des Trennstrahls beziehungsweise der Trenneinheit längs der Vorschubachse und senkrecht dazu, können durch entsprechende Ansteuerung der Vorschubantriebe und des Trenneinheit-Querantriebs der erfindungsgemäßen maschinellen Anordnungen an einem zu bearbeitenden Werkstück Trennspalte mit einem beliebigen zweiachsigen Verlauf erzeugt werden.

Von besonderer Bedeutung für die Erzielung eines qualitativ hochwertigen Ergebnisses der trennenden Werkstückbearbeitung ist eine konstante Bearbeitungsgeschwindigkeit des Trennstrahls relativ zu dem trennend bearbeiteten Werkstück, wie sie im Falle der erfindungsgemäßen Verfahren gemäß den Patentansprüchen 4 und 5 und im Falle der erfindungsgemäßen maschinellen Anordnungen gemäß den Patentansprüchen 10 und 12 gewährleistet ist. Der Betrag der zu erzielenden Bearbeitungsgeschwindigkeit wird in Abhängigkeit von der sich konkret stellenden Bearbeitungsaufgabe vorgegeben. Eine konstante Bearbeitungs-Längsgeschwindigkeit längs der Vorschubachse wird im Falle der Erfindung dadurch realisiert, dass der Trennstrahl beziehungsweise die Trenneinheit in dem gleichen Maße wie sich die Geschwindigkeit des Werkstückträgers erhöht oder vermindert abgebremst oder beschleunigt wird. Durch die Dynamik des Trennstrahls beziehungsweise der Trenneinheit kann die Trägheit des Werkstückträgers kompensiert werden.

Ebenfalls im Interesse eines qualitativ hochwertigen Ergebnisses der trennenden Werkstückbearbeitung ist in weiterer bevorzugter Ausgestaltung der Erfindung für den Werkstückträger ein Vorschubantrieb mit zwei Antriebsmotoren vorgesehen, die einander entgegengesetzte Antriebsrichtungen längs der Vorschubachse aufweisen und die längs der Vorschubachse gegeneinander verspannt werden können (Patentanspruch 6). Durch das gegenseitige Verspannen der Antriebsmotoren des Werkstückträger-Vorschubantriebs kann die relativ zu dem Trennstrahl ausgeführte aktive Arbeitsbewegung des Werkstückträgers mit minimalem Antriebsspiel und folglich mit hoher Genauigkeit längs der Vorschubachse ausgeführt werden. Diese Möglichkeit besteht insbesondere auch dann, wenn ein Werkstückträger-Vorschubantrieb zum Einsatz kommt, der wie etwa ein Triebstockantrieb bauartbedingt an sich spielbehaftet ist. Zur Erzeugung der gegenseitigen Verspannung der Antriebsmotoren wird dem Motormoment des treibenden Antriebsmotors in bevorzugter Ausgestaltung der Erfindung ein Motormoment des zweiten Antriebsmotors entgegengesetzt, dessen Betrag 10% bis 20% des Betrages des treibenden Motormoments beträgt.

Ein gegenseitiges Verspannen von gegenläufigen Antriebsmotoren des Werkstückträger-Vorschubantriebs zur stationären Fixierung des Werkstückträgers während aktiver Arbeitsbewegungen des Trennstrahls beziehungsweise der Trenneinheit bietet den Vorteil, dass eine etwaige aktive Arbeitsbewegung des zunächst stationären Werkstückträgers mit minimaler Verzögerung eingeleitet werden kann (Patentanspruch 7). Zur Änderung des Bewegungszustandes des Werkstückträgers bedarf es lediglich einer entsprechenden Regelung der Motormomente der Antriebsmotoren des Werkstückträger-Vorschubantriebs.

Nachfolgend wir die Erfindung anhand beispielhafter schematischer Darstellungen näher erläutert. Es zeigen:
- Figur 1: eine maschinelle Anordnung für die trennende Blechbearbeitung mittels Laser,
- Figur 2: einen motorischen Vorschubantrieb für einen Werkstückträger der maschinellen Anordnung gemäß Figur 1 und
- Figur 3: ein Beispiel für eine trennende Überformatbearbeitung mittels der maschinellen Anordnung gemäß Figur 1.

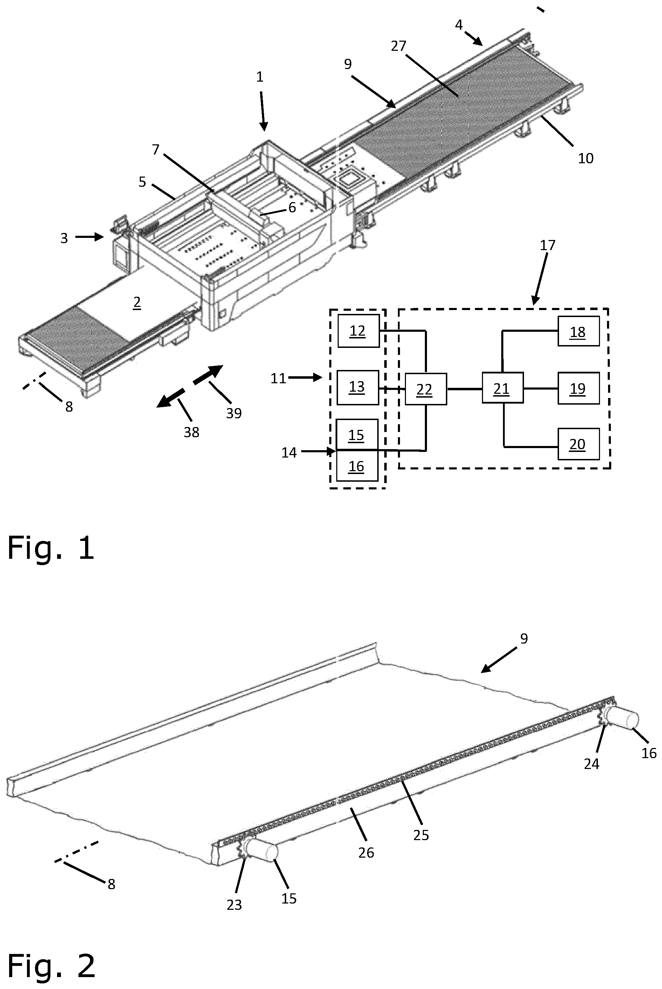

Ausweislich Figur 1 umfasst eine maschinelle Anordnung 1 zum trennenden Bearbeiten eines Werkstücks in Form eines Blechs 2 als Bearbeitungsmaschine eine Laser-Flachbettmaschine 3 und außerdem eine maschinelle Beschickungseinrichtung 4 für die Laser-Flachbettmaschine 3.

Die Laser-Flachbettmaschine 3 weist in gewohnter Weise eine Einhausung 5 auf, in deren Inneren eine als Laserschneidkopf 6 ausgeführte Trenneinheit zweiachsige aktive Arbeitsbewegungen ausführen kann. Zu diesem Zweck ist der Laserschneidkopf 6 an einem Portalquerträger 7 der Laser-Flachbettmaschine 3 angeordnet. Der Portalquerträger 7 kann motorisch angetrieben entlang einer Vorschubachse 8 in einander entgegengesetzte Richtungen verfahren, wobei der Verfahrweg des Portalquerträgers 7 längs der Vorschubachse 8 längenmäßig begrenzt ist. An dem Portalquerträger 7 entlang kann sich der Laserschneidkopf 6 motorisch angetrieben senkrecht zu der Vorschubachse 8 in einander entgegengesetzte Richtungen bewegen.

Zur trennenden Bearbeitung richtet der Laserschneidkopf 6 einen in den Figuren nicht gezeigten Laser-Trennstrahl auf das Blech 2, wobei der Laser-Trennstrahl senkrecht zu einer Hauptebene des Blechs 2 verläuft.

Die maschinelle Beschickungseinrichtung 4 dient zum Bewegen des Blechs 2 längs der Vorschubachse 8. Zu diesem Zweck ist das Blech 2 auf einem als Werkstückpalette 9 ausgebildeten Werkstückträger gelagert. Die Werkstückpalette 9 ist an einer Trag- und Führungsstruktur 10 der maschinellen Beschickungseinrichtung 4 längs der Vorschubachse 8 in beiden Richtungen angetrieben beweglich.

Ein motorischer Antrieb 11 der maschinellen Anordnung 1, mittels dessen zur trennenden Bearbeitung des Blechs 2 Bewegungen des Laserschneidkopfs 6 und der Werkstückpalette 9 längs der Vorschubachse 8 und Bewegungen des Laserschneidkopfs 6 senkrecht zu der Vorschubachse 8 erzeugt werden, ist in Fig. 1 stark schematisch dargestellt.

Im Einzelnen vorgesehen sind ein motorischer Schneidkopf-Längsantrieb 12 als Trenneinheit-Vorschubantrieb, ein motorischer Schneidkopf-Querantrieb 13 als Trenneinheit-Querantrieb sowie ein motorischer Paletten-Längsantrieb 14 als Werkstückträger-Vorschubantrieb und Teil der maschinellen Beschickungseinrichtung 4. Mittels des Schneidkopf-Längsantriebs 12 werden der Laserschneidkopf 6 und der von diesem emittierte Laser-Trennstrahl durch entsprechendes Verfahren des Portalquerträgers 7 der Laser-Flachbettmaschine 3 längs der Vorschubachse 8 bewegt. Schneidkopf- und Trennstrahlbewegungen senkrecht zu der Vorschubachse 8 werden mittels des Schneidkopf-Quer-antriebs 13 längs des Portalquerträgers 7 erzeugt. Zur Bewegung der Werkstückpalette 9 längs der Vorschubachse 8 ist der Paletten-Längsantrieb 14 vorgesehen.

Bei den mittels des Schneidkopf-Längsantriebs 12, des Schneidkopf-Querantriebs 13 und des Paletten-Längsantriebs 14 bewirkten Paletten- und Schneidkopf- beziehungsweise Trennstrahlbewegungen kann es sich um aktive Arbeitsbewegungen oder um Positionierbewegungen handeln. Während einer aktiven Arbeitsbewegung wird das Blech 2 mittels des Laser-Trennstrahls trennend bearbeitet. Positionierbewegungen dienen dazu, den Laserschneidkopf 6 einerseits und die mit dem Blech 2 beladene Werkstückpalette 9 andererseits in der Regel bei ausgeschaltetem Laser-Trennstrahl relativ zueinander in eine Position zu überführen, die insbesondere als Ausgangspunkt einer aktiven Arbeitsbewegung angefahren wird.

Der Paletten-Längsantrieb 14 umfasst einen ersten Antriebsmotor 15 und einen zweiten Antriebsmotor 16. Die Antriebsmotoren 15, 16 des Paletten-Längsantriebs 14 können mit längs der Vorschubachse 8 einander entgegen gerichteten Antriebsrichtungen betrieben und längs der Vorschubachse 8 gegeneinander verspannt werden.

Sowohl der Schneidkopf-Längsantrieb 12 als auch der Schneidkopf-Querantrieb 13 und auch der Paletten-Längsantrieb 14 können in ihrer Antriebsrichtung umgesteuert werden.

Ebenso wie alle übrigen Funktionseinheiten der maschinellen Anordnung 1 werden auch der Schneidkopf-Längsantrieb 12, der Schneidkopf-Querantrieb 13 und der Paletten-Längsantrieb 14 durch eine in Figur 1 ebenfalls stark schematisch dargestellte programmierbare numerische Maschinensteuerung 17 gesteuert, die unter anderem als Antriebssteuerung vorgesehen ist.

Die numerische Maschinensteuerung 17 umfasst eine erste Messeinheit 18, eine zweite Messeinheit 19 und eine dritte Messeinheit 20.

Bei trennendem Betrieb der maschinellen Anordnung 1 misst die erste Messeinheit 18 der numerischen Maschinensteuerung 17 fortlaufend eine Trenneinheitbeziehungsweise Schneidkopf-Längsgeschwindigkeit, mit welcher der Schneidkopf-Längsantrieb 12 den Laserschneidkopf 6 längs der Vorschubachse 8 relativ zu der Werkstückpalette 9 unter trennender Bearbeitung des Blechs 2 aktiv bewegt. Mittels der zweiten Messeinheit 19 wird bei trennendem Betrieb der maschinellen Anordnung 1 fortlaufend eine Werkstückträger- beziehungsweise Paletten-Längsgeschwindigkeit gemessen, mit welcher die Werkstückpalette 9 von dem Paletten-Längsantrieb 14 längs der Vorschubachse 8 relativ zu dem Laserschneidkopf 6 aktiv bewegt wird. Zur fortlaufenden Messung einer Trenneinheitbeziehungsweise Schneidkopf-Quergeschwindigkeit, mit welcher der von dem Schneidkopf-Querantrieb 13 angetriebene Laserschneidkopf 6 unter trennender Bearbeitung des Blechs 2 eine aktive Arbeitsbewegung senkrecht zu der Vorschubachse 8 ausführt, dient die dritte Messeinheit 20.

Aus den mittels der ersten Messeinheit 18, der zweiten Messeinheit 19 und der dritten Messeinheit 20 gewonnenen Messwerten ermittelt eine Auswerteeinheit 21 der numerischen Maschinensteuerung 17 eine resultierende tatsächliche Bearbeitungsgeschwindigkeit, mit welcher der von dem Laserschneidkopf 6 auf das Blech 2 gerichtete Trennstrahl das Blech 2 trennend bearbeitet. Die tatsächliche Bearbeitungsgeschwindigkeit wird von der Auswerteeinheit 21 mit einer in der numerischen Maschinensteuerung 17 hinterlegten, anwendungsbezogenen Soll-Bearbeitungsgeschwindigkeit verglichen. In Abhängigkeit von dem Vergleichsergebnis bewirkt eine Steuereinheit 22 der numerischen Maschinensteuerung 17 eine Regelung des Schneidkopf-Längsantriebs 12 und/oder des Schneidkopf-Querantriebs 13 und/oder des Paletten-Längsantriebs 14 dahingehend, dass die trennende Bearbeitung des Blechs 2 durch den von dem Laserschneidkopf 6 auf das Blech 2 gerichteten Trennstrahl gleichförmig mit der Soll-Bearbeitungsgeschwindigkeit erfolgt.

Der Bauart nach handelt es sich in dem dargestellten Beispielsfall bei dem Schneidkopf-Längsantrieb 12 um einen herkömmlichen hochgenauen Zahnstangenantrieb, bei dem Schneidkopf-Querantrieb 13 um einen herkömmlichen und ebenfalls hochgenauen Linearantrieb und bei dem Paletten-Längsantrieb 14 um einen herkömmlichen Triebstockantrieb.

Der Triebstockantrieb für die Werkstückpalette 9 ist in Figur 2 stark vereinfacht dargestellt.

Auf Motorwellen der im vorliegenden Fall elektrischen Antriebsmotoren 15, 16 des Paletten-Längsantriebs 14 sitzen herkömmliche Triebstockräder 23, 24, die ihrerseits in einen herkömmlichen Triebstock 25 eingreifen. Der Triebstock 25 ist an einem Palettenrahmen 26 der Werkstückpalette 9 angebracht und verläuft dort längs der Vorschubachse 8.

In Figur 2 nicht dargestellt sind in Figur 1 gezeigte Auflageleisten 27 der Werkstückpalette 9, die an dem Palettenrahmen 26 in gewohnter Weise senkrecht zu der Vorschubachse 8 und parallel zueinander verlaufen und die längs der Vorschubachse 8 voneinander beabstandet sind. Auf Spitzen der Auflageleisten 27 ist das Blech 2 während der trennenden Laserbearbeitung gelagert.

Aus konstruktiven Gründen ist der Verfahrweg des Laserschneidkopfs 6 längs der Vorschubachse 8 und senkrecht zu der Vorschubachse 8 begrenzt. Aus der zweiachsigen Begrenzung des Verfahrwegs des Laserschneidkopfs 6 resultiert eine entsprechende Begrenzung des Arbeitsbereichs des von dem Laserschneidkopf 6 emittierten Laser-Trennstrahls.

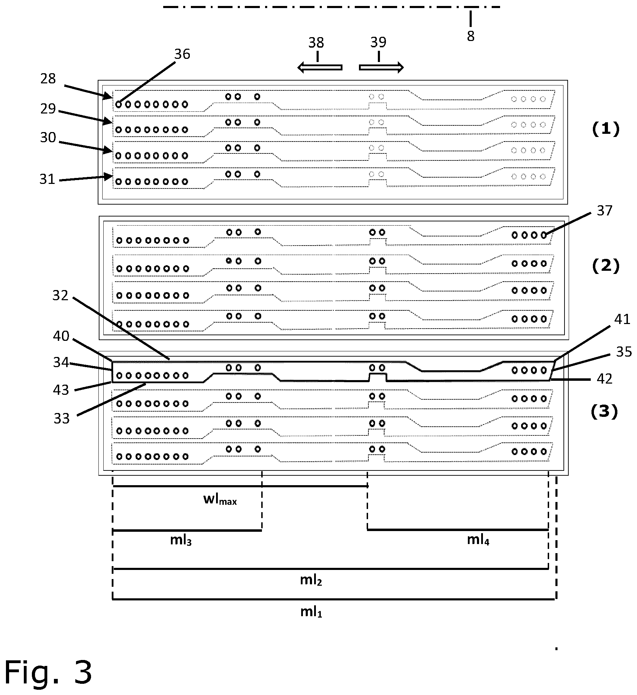

Eine mittels der maschinellen Anordnung 1 durchgeführte trennende Bearbeitung des Blechs 2 ist in Figur 3 beispielhaft veranschaulicht.

Eine maximale Arbeitslänge des Laser-Trennstrahls, das heißt die Weglänge, über welche der Laser-Trennstrahl durch Verfahren des Portalquerträgers 7 mit dem Laserschneidkopf 6 längs der Vorschubachse 8 maximal bewegt werden kann, ist in Figur 3 als wl**ₘₐₓ** bezeichnet. Das zu bearbeitende Blech 2 weist demnach gegenüber dem Arbeitsbereich des Laser-Trennstrahls längs der Vorschubachse 8 ein Überformat auf. Senkrecht zu der Vorschubachse 8 liegt die Abmessung des Blechs 2 innerhalb der Reichweite des Laser-Trennstrahls.

Durch trennende Bearbeitung des Blechs 2 mittels des von dem Laserschneidkopf 6 emittierten Laser-Trennstrahls sollen aus dem Blech 2 Fertigteile 28, 29, 30, 31 ausgeschnitten werden.

Zum Freischneiden der Außenkontur jedes der Fertigteile 28, 29, 30, 31 sind mittels des Laser-Trennstrahls an dem Blech 2 ein oberer Trennspalt 32, ein unterer Trennspalt 33 sowie zur Verbindung des oberen Trennspalts 32 und des unteren Trennspalts 33 ein vorderer Trennspalt 34 und ein hinterer Trennspalt 35 zu erzeugen. Außerdem sind an den Fertigteilen 28, 29, 30, 31 als Innenkonturen Blechöffnungen 36 und Blechöffnungen 37 zu erstellen. In Figur 3 sind die Konturen der Fertigteile 28, 29, 30, 31 im noch nicht freigeschnittenen Zustand gestrichelt und im freigeschnittenen Zustand mit ausgezogenen Linien dargestellt.

Auch die Erstreckung der Fertigteile 28, 29, 30, 31 beziehungsweise die Erstreckung des jeweiligen oberen Trennspalts 32 und des jeweiligen unteren Trennspalts 33 längs der Vorschubachse 8 ist größer als die entsprechende Erstreckung des Arbeitsbereichs des Laser-Schneidkopfs 6 und des Laser-Trennstrahls. Zur Erzeugung der Fertigteile 28, 29, 30, 31 ist das Blech 2 folglich längs der Vorschubachse 8 über Bearbeitungslängen ml**₁**, ml**₂** trennend zu bearbeiten, die größer sind als die maximale Arbeitslänge wl**ₘₐₓ** des Laser-Trennstrahls.

Die Blechöffnungen 36 und die Blechöffnungen 37 sind innerhalb der Außenkontur des jeweiligen Fertigteils 28, 29, 30, 31 über eine Bearbeitungslänge ml**₃** und über eine Bearbeitungslänge ml**₄** zu erstellen. Sowohl die Bearbeitungslänge ml**₃** als auch die Bearbeitungslänge ml**₄** sind kleiner als die maximale Arbeitslänge wl**ₘₐₓ** des Laser-Trennstrahls. Die Bearbeitungslänge ml**₄** ist größer als die Bearbeitungslänge ml**₃**.

Bewegungsrichtungen des Laserschneidkopfs 6 sowie des Blechs 2 und der das Blech 2 lagernden Werkstückpalette 9 längs der Vorschubachse 8 sind in den Figuren 1 und 3 durch Pfeile 38, 39 veranschaulicht.

Vor Beginn des Trennprozesses wird das auf der Werkstückpalette 9 abgelegte und noch unbearbeitete Blech 2 mittels des Paletten-Längsantriebs 14 längs der Vorschubachse 8 in der Bewegungsrichtung 38 aus einer Position außerhalb der Laser-Flachbettmaschine 3 in deren Arbeitsbereich vorgeschoben. Das noch unbearbeitete Blech 2 und der Laserschneidkopf 6 werden längs der Vorschubachse 8 relativ zueinander derart positioniert, dass die Bearbeitungslänge ml**₃** innerhalb der maximalen Arbeitslänge wl**ₘₐₓ** des Laser-Trennstrahls liegt, wobei das in der Bewegungsrichtung 38 gelegene Ende der Bearbeitungslänge ml₃ des Blechs 2 dem in der Bewegungsrichtung 38 gelegenen Ende der maximalen Arbeitslänge wl**ₘₐₓ** des Laser-Trennstrahls eng benachbart ist. Die Startposition des Laser-Trennstrahls befindet sich längs der Vorschubachse 8 an dem in der Bewegungsrichtung 38 gelegenen Ende der Bearbeitungslänge ml**₃** senkrecht zu der Vorschubachse 8 an dem noch freizuschneidenden Fertigteil 28.

Aufgrund der gegenseitigen Positionierung des Blechs 2 und des Laserschneidkopfs 6 zu Beginn des Trennprozesses kann der von dem Laserschneidkopf 6 emittierte Laser-Trennstrahl bei dem anschließenden Trennprozess an dem Blech 2 sämtliche Blechöffnungen 36 unter Bewegen ausschließlich des Laser-Schneidkopfs 6 erstellen. Dabei erzeugt der Laser-Trennstrahl die Blechöffnungen 36 sämtlicher Fertigteile 28, 29, 30, 31 beginnend mit der in der Bewegungsrichtung 38 vorderen Blechöffnung 36 des Fertigteils 28.

Der Laserschneidkopf 6 und der Laser-Trennstrahl werden zum Erstellen der Blechöffnungen 36 relativ zu dem stationären Blech 2 und der das Blech 2 lagernden stationären Werkstückpalette 9 sowohl mittels des Schneidkopf-Längsantriebs 12 längs der Vorschubachse 8 in den Bewegungsrichtungen 38, 39 als auch mittels des Schneidkopf-Querantriebs 13 senkrecht zu der Vorschubachse 8 bewegt. Dabei führt der Laser-Trennstrahl längs der Vorschubachse 8 und senkrecht dazu sowohl zweiachsige aktive Arbeitsbewegungen als auch zweiachsige Positionierbewegungen aus. Der Paletten-Längsantrieb 14 hält die Werkstückpalette 9 während des Freischneidens der Blechöffnungen 36 in Ruhe.

Nach dem Erstellen der Blechöffnungen 36 sämtlicher Fertigteile 28, 29, 30, 31 ist das Blech 2 in Teildarstellung (1) von Figur 3 gezeigt.

Zuletzt wird die in der Bewegungsrichtung 39 vordere Blechöffnung 36 des Fertigteils 31 freigeschnitten. Längs der Vorschubachse 8 befindet sich der Laser-Trennstrahl bei Fertigstellung der letzten Blechöffnung 36 folglich an dem in der Bewegungsrichtung 39 gelegenen Ende der Bearbeitungslänge ml**₃**.

Bei abgeschaltetem Laser-Trennstrahl wird nun das von der Werkstückpalette 9 gelagerte Blech 2 mittels des Paletten-Längsantriebs 14 in der Bewegungsrichtung 38 längs der Vorschubachse 8 nachgesetzt, bis das in der Bewegungsrichtung 38 voreilende Ende der Bearbeitungslänge ml**₄** auf Höhe des in der Bewegungsrichtung 38 gelegenen Endes der maximalen Arbeitslänge wl**ₘₐₓ** des Laser-Trennstrahls liegt. Außerdem verfährt der Laser-Schneidkopf 6 längs der Vorschubachse in der Bewegungsrichtung 39 bis auf Höhe des in der Bewegungsrichtung 39 vorderen Endes der Bearbeitungslänge ml**₄** und senkrecht zu der Vorschubachse 8 in eine Position, bei welcher der Laser-Trennstrahl nach dem Einschalten an dem Blech 2 zunächst die in der Bewegungsrichtung 38 hintere Blechöffnung 37 des Fertigteils 31 freischneiden kann. Anschließend werden mittels des Laser-Trennstrahls nacheinander die übrigen Blechöffnungen 37 der Fertigteile 28, 29, 30, 31 erstellt.

Zum Freischneiden der Blechöffnungen 37 wird wiederum ausschließlich der Laser-Trennstrahl bewegt, die Werkstückpalette 9 und das von diesem gelagerte Blech 2 sind auch während des Freischneidens der Blechöffnungen 37 stationär. Der Laser-Trennstrahl wird mittels des Schneidkopf-Längsantriebs 12 längs der Vorschubachse 8 in den Bewegungsrichtungen 38, 39 und mittels des Schneidkopf Querantriebs 13 senkrecht zu der Vorschubachse 8 bewegt, während der Paletten-Längsantrieb 14 wiederum keine Antriebsbewegung erzeugt.

Als letzte der Blechöffnungen 37 wird die in der Bewegungsrichtung 38 vordere Blechöffnung 37 des Fertigteils 28 freigeschnitten. Mit Fertigstellen der letzten der Blechöffnungen 37 befindet sich der Laser-Trennstrahl längs der Vorschubachse 8 nahe den in der Bewegungsrichtung 38 gelegenen Enden der Bearbeitungslänge ml**₄** des Blechs 2 und der maximalen Arbeitslänge wl**ₘₐₓ** des Laser-Trennstrahls.

Ausgehend von diesen Verhältnissen werden der Laserschneidkopf 6 und das Blech 2 mittels des Schneidkopf-Längsantriebs 12, des Schneidkopf-Querantriebs 13 und des Paletten-Längsantriebs 14 bei ausgeschaltetem Laser-Trennstrahl relativ zueinander derart positioniert, dass der Laser-Trennstrahl nach dem Einschalten an einem Startpunkt 40 des das Fertigteil 28 begrenzenden oberen Trennspalts 32 in das Blech 2 einsticht.

Im Einzelnen wird der Laserschneidkopf 6 zur Positionierung gegenüber dem Blech 2 mittels des Schneidkopf-Längsantriebs 12 längs der Vorschubachse 8 in der Bewegungsrichtung 38 und mittels des Schneidkopf-Querantriebs 13 senkrecht zu der Vorschubachse 8 bewegt. Längs der Vorschubachse 8 wird der Laser-Schneidkopf 6 dabei in eine Position überführt, in welcher der von dem Laserschneidkopf 6 später emittierte Laser-Trennstrahl längs der Vorschubachse 8 an dem in der Bewegungsrichtung 38 gelegenen Ende der maximalen Arbeitslänge wlₘₐₓ des Laser-Trennstrahls angeordnet ist. Das Blech 2 wird bei ausgeschaltetem Laser-Trennstrahl mittels des Paletten-Längsantriebs 14 längs der Vorschubachse 8 in der Bewegungsrichtung 39 bewegt, bis der Startpunkt 40 des oberen Trennspalts 32 des Fertigteils 28 längs der Vorschubachse 8 eine Position einnimmt, in welcher er von dem Laser-Trennstrahl nach dessen Einschalten beaufschlagt wird. Längs der Vorschubachse 8 liegt demnach auch der Startpunkt 40 des oberen Trennspalts 32 des Fertigteils 28 an dem in der Bewegungsrichtung 38 gelegenen Ende der maximalen Arbeitslänge wl**ₘₐₓ** des Laser-Trennstrahls.

Die betreffende Position des Blechs 2 mit den fertiggestellten Blechöffnungen 36, 37 sämtlicher Fertigteile 28, 29, 30, 31 ist in Teildarstellung (2) von Figur 3 gezeigt.

Nach dem Einstechen des Laser-Trennstrahls erzeugt der Schneidkopf-Längsantrieb 12 eine relativ zu der Werkstückpalette 9 und dem von dieser gelagerten Blech 2 längs der Vorschubachse 8 in der Bewegungsrichtung 39 ausgeführte aktive Arbeitsbewegung des Laser-Trennstrahls. Gleichzeitig leitet der Paletten-Längsantrieb 14 eine der aktiven Arbeitsbewegung des Laser-Trennstrahls entgegen gerichtete und längs der Vorschubachse 8 in der Bewegungsrichtung 38 ausgeführte aktive Arbeitsbewegung der Werkstückpalette 9 und des von dieser gelagerten Blechs 2 ein. Zum Erstellen des Trennspalts 32 erforderliche aktive Arbeitsbewegungen des Laser-Trennstrahls senkrecht zu der Vorschubachse 8 werden mittels des Schneidkopf-Querantriebs 13 erzeugt und dabei der längs der Vorschubachse 8 ausgeführten aktiven Arbeitsbewegung des Laser-Trennstrahls überlagert.

Die einander überlagerten aktiven Arbeitsbewegungen des Laser-Trennstrahls und der Werkstückpalette 9 werden von der numerischen Maschinensteuerung 17 im Interesse einer möglichst gleichförmigen resultierenden Relativbewegung des Laser-Trennstrahls einerseits und des Blechs 2 beziehungsweise der Werkstückpalette 9 andererseits auf der Grundlage der von den Geschwindigkeits-Messeinheiten 18, 19, 20 gelieferten Messwerten für die Schneidkopf-Längsgeschwindigkeit, die Schneidkopf-Quergeschwindigkeit und die Paletten-Längsgeschwindigkeit derart gesteuert, dass der obere Trennspalt 32 an dem Blech 2 mit einer konstanten und in der numerischen Maschinensteuerung 17 anwendungsbezogen hinterlegten Bearbeitungsgeschwindigkeit erzeugt wird.

Die numerische Maschinensteuerung 17 bewirkt insbesondere, dass die Beschleunigung des aufgrund einer entsprechenden Dynamik des Laserschneidkopfs 6 hochdynamischen Laser-Trennstrahls und die Beschleunigung der massebedingt relativ trägen Werkstückpalette 9 aufeinander abgestimmt werden dergestalt, dass die mittels des Schneidkopf-Längsantriebs 12 erzeugte Bewegung des Laser-Trennstrahls längs der Vorschubachse 8 in dem Maße verzögert wird, in dem der Paletten-Längsantrieb 14 die Werkstückpalette 9 längs der Vorschubachse 8 beschleunigt und dergestalt, dass der Schneidkopf-Längsantrieb 12 den Laser-Trennstrahl längs der Vorschubachse 8 in dem Maße beschleunigt, in dem der Paletten-Längsantrieb 14 die Werkstückpalette 9 längs der Vorschubachse 8 verzögert.

Zur maximalen Ausnutzung der Dynamik des Laser-Trennstrahls steuert die numerische Maschinensteuerung 17 die einander überlagerten Bewegungen des Laser-Trennstrahls einerseits und der Werkstückpalette 9 beziehungsweise des Blechs 2 andererseits derart, dass der Laser-Trennstrahl seine maximale Bewegungsmöglichkeit längs der Vorschubachse 8 ausnutzt. Im vorliegenden Beispielsfall ist folglich der Laser-Trennstrahl bei Erreichen eines in der Bewegungsrichtung 39 gelegenen Endpunkts 41 des oberen Trennspalts 32 des Fertigteils 28 an dem in der Bewegungsrichtung 39 gelegenen Ende seiner maximalen Arbeitslänge wl**ₘₐₓ** angekommen.

Der Endpunkt 41 des Trennspalts 32 bildet gleichzeitig einen Startpunkt des hinteren Trennspalts 35. Nachdem der hintere Trennspalt 35 nur geringfügig längs der Vorschubachse 8 verläuft, wird er ausschließlich mit einer aktiven Arbeitsbewegung des Laser-Trennstrahls freigeschnitten, die ihrerseits als zweiachsige Bewegung mittels des Schneidkopf-Längsantriebs 12 und des Schneidkopf-Quer-antriebs 13 erzeugt wird.

Ein Endpunkt 42 des hinteren Trennspalts 35 ist gleichzeitig Startpunkt des unteren Trennspalts 33. Der untere Trennspalt 33 wird in gleicher Weise erzeugt wie der obere Trennspalt 32 und folglich insbesondere durch einander überlagerte und gegenläufige aktive Arbeitsbewegungen des Laser-Trennstrahls und der Werkstückpalette 9 mit dem Blech 2 längs der Vorschubachse 8. Verglichen mit der Erstellung des oberen Trennspalts 32 sind bei der Erzeugung des unteren Trennspalts 33 die Antriebsrichtungen des Schneidkopf-Längsantriebs 12 und des Paletten-Längsantriebs 14 umgekehrt.

Ausgehend von einem Endpunkt 43 des unteren Trennspalts 33 wird zuletzt der vordere Trennspalt 34 freigeschnitten. Nachdem der vordere Trennspalt 34 einachsig senkrecht zu der Vorschubachse 8 verläuft, wird zum Freischneiden des vorderen Trennspalts 34 ausschließlich eine mittels des Schneidkopf-Querantriebs 13 erzeugte aktive Arbeits-Querbewegung des Laser-Trennstrahls senkrecht zu der Vorschubachse 8 ausgeführt.

Nach dem vollständigen Freischneiden des Fertigteils 28 werden nacheinander die Fertigteile 29, 30, 31 aus dem Verbund des Blechs 2 getrennt, wobei die Vorgehensweise beim Erstellen der Fertigteile 29, 30, 31 der Vorgehensweise beim Freischneiden des Fertigteils 28 entspricht.

Der stationäre Zustand der Werkstückpalette 9 bei der trennenden Bearbeitung des Blechs 2 wird hergestellt, indem die Antriebsmotoren 15, 16 des Paletten-Längsantriebs 14 längs der Vorschubachse 8 mit einander entgegen gerichteten aber betragsmäßig miteinander übereinstimmenden Motormomenten gegeneinander verspannt werden. Aktive Arbeitsbewegungen führt die Werkstückpalette 9 ebenfalls bei gegeneinander verspannten Antriebsmotoren 15, 16 aus, wobei dann allerdings einer der Antriebsmotoren 15, 16 den treibenden Antriebsmotor bildet, dessen Motormoment von dem zweiten der Antriebsmotoren 15, 16 ein Antriebsmoment entgegensetzt wird, welches in der Größenordnung von 10 % bis 20 % des treibenden Motormoments liegt.

## Patentansprüche

1. Verfahren zum trennenden Bearbeiten eines plattenartigen Werkstücks (2), insbesondere eines Blechs, mittels eines Trennstrahls,
• wobei das Werkstück (2) bei der trennenden Bearbeitung mittels eines Werkstückträgers (9) gelagert wird,
• wobei der Trennstrahl unter trennender Bearbeitung des Werkstücks (2) in einer senkrecht zu einer Hauptebene des Werkstücks (2) verlaufenden Strahlrichtung auf das von dem Werkstückträger (9) gelagerte Werkstück (2) gerichtet wird,
• wobei das Werkstück (2) und der auf das Werkstück (2) gerichtete Trennstrahl relativ zueinander senkrecht zu der Strahlrichtung des Trennstrahls längs einer Vorschubachse (8) über eine Bearbeitungslänge (ml**₁**, ml**₂**) bewegt werden und dadurch unter trennender Bearbeitung des Werkstücks (2) mittels des Trennstrahls an dem Werkstück (2) ein Trennspalt (32, 33) erzeugt wird, der längs der Vorschubachse (8) über die Bearbeitungslänge (ml**₁**, ml**₂**) verläuft und
• wobei der Trennstrahl unter trennender Bearbeitung des Werkstücks (2) über eine durch eine maximale Arbeitslänge (wlₘₐₓ) begrenzte Arbeitslänge relativ zu dem das Werkstück (2) lagernden Werkstückträger (9) mit einer aktiven Arbeitsbewegung längs der Vorschubachse (8) bewegt wird,
**dadurch gekennzeichnet, dass**
mittels des Trennstrahls an dem Werkstück (2) ein Trennspalt (32, 33) erzeugt wird, der längs der Vorschubachse (8) über eine Bearbeitungslänge (ml**₁**, ml**₂**) verläuft, welche größer ist als die maximale Arbeitslänge (wlₘₐₓ) des Trennstrahls, indem zusätzlich zu einer aktiven Arbeitsbewegung des Trennstrahls längs der Vorschubachse (8) von dem Werkstückträger (9) gemeinschaftlich mit dem von dem Werkstückträger (9) gelagerten Werkstück (2) unter trennender Bearbeitung des Werkstücks (2) eine aktive Arbeitsbewegung längs der Vorschubachse (8) relativ zu dem Trennstrahl ausgeführt wird,
• wobei die aktive Arbeitsbewegung des Werkstückträgers (9) längs der Vorschubachse (8) der aktiven Arbeitsbewegung des Trennstrahls längs der Vorschubachse (8) entgegengerichtet ist,
• wobei die aktive Arbeitsbewegung des Werkstückträgers (9) längs der Vorschubachse (8) wenigstens einem Teil der aktiven Arbeitsbewegung des Trennstrahls längs der Vorschubachse (8) überlagert wird und
• wobei sich der Betrag der aktiven Arbeitsbewegung des Trennstrahls längs der Vorschubachse (8) und der Betrag der aktiven Arbeitsbewegung des Werkstückträgers (9) längs der Vorschubachse (8) zu der die maximale Arbeitslänge (wlₘₐₓ) des Trennstrahls übersteigenden Bearbeitungslänge (ml**₁**, ml**₂**) summieren.

2. Verfahren nach Anspruch 1, **dadurch gekennzeichnet, dass** das Werkstück (2) mittels des Trennstrahls längs der Vorschubachse (8) über eine Bearbeitungslänge (ml**₃**, ml**₄**) trennend bearbeitet wird, die nicht größer ist als die maximale Arbeitslänge (wlₘₐₓ) des Trennstrahls, indem der Trennstrahl relativ zu dem gemeinschaftlich mit dem Werkstück (2) längs der Vorschubachse (8) stationären Werkstückträger (9) längs der Vorschubachse (8) bewegt wird.

3. Verfahren nach einem der vorhergehenden Ansprüche, **dadurch gekennzeichnet, dass** mittels des Trennstrahls an dem Werkstück (2) ein Trennspalt (34, 35) erzeugt wird, der senkrecht zu der Vorschubachse (8) über eine Bearbeitungsbreite verläuft, indem der Trennstrahl relativ zu dem gemeinschaftlich mit dem Werkstück (2) senkrecht zu der Vorschubachse (8) stationären Werkstückträger (9) mit einer aktiven Arbeits-Querbewegung senkrecht zu der Vorschubachse (8) über die Bearbeitungsbreite bewegt wird.

4. Verfahren nach einem der vorhergehenden Ansprüche, **dadurch gekennzeichnet,**
• **dass** der Trennstrahl bei der aktiven Arbeitsbewegung des Trennstrahls längs der Vorschubachse (8) mit einer Trennstrahl-Längsgeschwindigkeit relativ zu dem das Werkstück (2) lagernden Werkstückträger (9) längs der Vorschubachse (8) bewegt wird,
• **dass** der das Werkstück lagernde Werkstückträger (9) bei der aktiven Arbeitsbewegung des Werkstückträgers (9) längs der Vorschubachse (8) mit einer Werkstückträger-Längsgeschwindigkeit relativ zu dem Trennstrahl längs der Vorschubachse (8) bewegt wird,
• **dass** die Trennstrahl-Längsgeschwindigkeit und die Werkstückträger-Längsgeschwindigkeit fortlaufend gemessen werden,
• **dass** aus der gemessenen Trennstrahl-Längsgeschwindigkeit und der gemessenen Werkstückträger-Längsgeschwindigkeit fortlaufend als resultierende Längsgeschwindigkeit eine Bearbeitungs-Längsgeschwindigkeit bestimmt wird, mit welcher der Trennstrahl unter trennender Bearbeitung des Werkstücks (2) an dem Werkstück (2) einen längs der Vorschubachse (8) verlaufenden Trennspalt (32, 33) erzeugt und
• **dass** die Trennstrahl-Längsgeschwindigkeit und die Werkstückträger-Längsgeschwindigkeit derart geregelt werden, dass sich eine konstante Bearbeitungs-Längsgeschwindigkeit ergibt.

5. Verfahren nach Anspruch 3 und Anspruch 4, **dadurch gekennzeichnet, dass** zusätzlich zu der Trennstrahl-Längsgeschwindigkeit und der Werkstückträger-Längsgeschwindigkeit eine Trennstrahl-Quergeschwindigkeit fortlaufend gemessen wird, mit welcher der Trennstrahl bei der aktiven Arbeits-Querbewegung senkrecht zu der Vorschubachse (8) bewegt wird und dass die Trennstrahl-Längsgeschwindigkeit, die Trennstrahl-Quergeschwindigkeit und die Werkstückträger-Längsgeschwindigkeit derart geregelt werden, dass sich eine konstante Bearbeitungsgeschwindigkeit ergibt, mit welcher der Trennstrahl unter trennender Bearbeitung des Werkstücks (2) an dem Werkstück (2) einen längs der Vorschubachse (8) und einen senkrecht zu der Vorschubachse (8) verlaufenden Trennspalt (32, 33, 34, 35) erzeugt.

6. Verfahren nach einem der vorhergehenden Ansprüche, **dadurch gekennzeichnet, dass** der Werkstückträger (9) zur Ausführung der aktiven Arbeitsbewegung des Werkstückträgers (9) längs der Vorschubachse (8) mittels eines motorischen Werkstückträger-Vorschubantriebs (14) angetrieben wird, der zwei Antriebsmotoren (15, 16) mit längs der Vorschubachse (8) einander entgegen gerichteten Antriebsrichtungen aufweist, wobei einer der Antriebsmotoren (15, 16) des motorischen Werkstückträger-Vorschubantriebs (14) als treibender Antriebsmotor (15, 16) zur Ausführung der aktiven Arbeitsbewegung des Werkstückträgers (9) längs der Vorschubachse (8) betrieben wird und der andere der Antriebsmotoren (15, 16) gegen den treibenden Antriebsmotor (15, 16) verspannt wird.

7. Verfahren nach Anspruch 2 und Anspruch 6, **dadurch gekennzeichnet, dass** der Werkstückträger (9) mittels des motorischen Werkstückträger-Vorschubantriebs (14) längs der Vorschubachse (8) stationär fixiert wird, indem die Antriebsmotoren (15, 16) des motorischen Werkstückträger-Vorschubantriebs (14) längs der Vorschubachse (8) gegeneinander verspannt werden.

8. Maschinelle Anordnung zum trennenden Bearbeiten eines plattenartigen Werkstücks (2), insbesondere eines Blechs, mittels eines Trennstrahls,
• mit einem Werkstückträger (9) zur Lagerung des Werkstücks (2) bei der trennenden Bearbeitung,
• mit einer Bearbeitungsmaschine (3) mit einer Trenneinheit (6), mittels derer der Trennstrahl unter trennender Bearbeitung des Werkstücks (2) in einer senkrecht zu einer Hauptebene des Werkstücks (2) verlaufenden Strahlrichtung auf das von dem Werkstückträger (9) gelagerte Werkstück (2) richtbar ist,
• mit einem motorischen Vorschubantrieb, mittels dessen der das Werkstück (2) lagernde Werkstückträger (9) und die den Trennstrahl auf das Werkstück (2) richtende Trenneinheit (6) relativ zueinander senkrecht zu der Strahlrichtung des Trennstrahls längs einer Vorschubachse (8) bewegbar sind und dadurch unter trennender Bearbeitung des Werkstücks (2) mittels des Trennstrahls an dem Werkstück (2) ein Trennspalt (32, 33) erzeugbar ist, der längs der Vorschubachse (8) über eine Bearbeitungslänge (ml**₁**, ml**₂**) verläuft,
• wobei der motorische Vorschubantrieb einen motorischen Trenneinheit-Vorschubantrieb (12) aufweist, mittels dessen die den Trennstrahl auf das Werkstück (2) richtende Trenneinheit (6) relativ zu dem das Werkstück (2) lagernden Werkstückträger (9) unter trennender Bearbeitung des Werkstücks (2) mittels des Trennstrahls längs der Vorschubachse (8) mit einer aktiven Trenneinheit-Längsbewegung begrenzt bewegbar ist und dadurch der Trennstrahl unter trennender Bearbeitung des Werkstücks (2) über eine durch eine maximale Arbeitslänge (wlₘₐₓ) begrenzte Zustelllänge relativ zu dem das Werkstück (2) lagernden Werkstückträger (9) mit einer aktiven Arbeitsbewegung längs der Vorschubachse (8) bewegbar ist,
**dadurch gekennzeichnet,**
**dass** der motorische Vorschubantrieb einen motorischen Werkstückträger-Vorschubantrieb (14) aufweist, mittels dessen der Werkstückträger (9) gemeinschaftlich mit dem von dem Werkstückträger (9) gelagerten Werkstück (2) relativ zu der den Trennstrahl auf das Werkstück (2) richtenden Trenneinheit (6) längs der Vorschubachse (8) mit einer aktiven Arbeitsbewegung bewegbar ist, welche der mittels des motorischen Trenneinheit-Vorschubantriebs (12) erzeugten aktiven Trenneinheit-Längsbewegung entgegen gerichtet ist und
**dass** eine, vorzugsweise numerische, Antriebssteuerung (17) vorgesehen ist, mittels derer der motorische Trenneinheit-Vorschubantrieb (12) und der motorische Werkstückträger-Vorschubantrieb (14) derart steuerbar sind, dass die aktive Arbeitsbewegung des Werkstückträgers (9) längs der Vorschubachse (8) wenigstens einem Teil der aktiven Trenneinheit-Längsbewegung überlagert ist und dass sich der Betrag der aktiven Trenneinheit-Längsbewegung und der Betrag der aktiven Arbeitsbewegung des Werkstückträgers (9) längs der Vorschubachse (8) zu einem resultierenden Betrag ergänzen, aufgrund dessen mittels des Trennstrahls an dem Werkstück (2) ein Trennspalt (32, 33) erzeugbar ist, der längs der Vorschubachse (8) über eine Bearbeitungslänge (ml**₁**, ml**₂**) verläuft, die größer ist als die maximale Arbeitslänge (wlₘₐₓ) des Trennstrahls längs der Vorschubachse (8).

9. Maschinelle Anordnung nach Anspruch 8, **dadurch gekennzeichnet, dass** mittels der Antriebssteuerung (17) der motorische Trenneinheit-Vorschubantrieb (12) und der motorische Werkstückträger-Vorschubantrieb (14) in Abhängigkeit von der Bearbeitungslänge steuerbar sind, wobei bei einer Bearbeitungslänge (ml**₃**, ml**₄**), die nicht größer ist als die maximale Arbeitslänge (wlₘₐₓ) des Trennstrahls längs der Vorschubachse (8), mittels der Antriebssteuerung (17) der motorische Trenneinheit-Vorschubantrieb (12) zur Ausführung einer Trenneinheit-Längsbewegung, nicht aber der motorische Werkstückträger-Vorschubantrieb (14) zur Ausführung einer aktiven Arbeitsbewegung des Werkstückträgers (9) gesteuert wird.

10. Maschinelle Anordnung nach Anspruch 8 oder Anspruch 9, **dadurch gekennzeichnet, dass** die Antriebssteuerung (17) umfasst:
• eine erste Messeinheit (18), mittels derer fortlaufend eine Trenneinheit-Längsgeschwindigkeit messbar ist, mit welcher die Trenneinheit (6) bei der aktiven Trenneinheit-Längsbewegung relativ zu dem Werkstückträger (9) längs der Vorschubachse (8) bewegt wird,
• eine zweite Messeinheit (19), mittels derer fortlaufend eine Werkstückträger-Längsgeschwindigkeit messbar ist, mit welcher der Werkstückträger (9) bei der aktiven Arbeitsbewegung des Werkstückträgers (9) längs der Vorschubachse (8) relativ zu der Trenneinheit (6) längs der Vorschubachse (8) bewegt wird,
• eine Auswerteeinheit (21), mittels derer aus der Trenneinheit-Längsgeschwindigkeit und der Werkstückträger-Längsgeschwindigkeit fortlaufend als resultierende Längsgeschwindigkeit eine Bearbeitungs-Längsgeschwindigkeit bestimmbar ist, mit welcher der Trennstrahl unter trennender Bearbeitung des Werkstücks (2) an dem Werkstück (2) einen längs der Vorschubachse (8) verlaufenden Trennspalt (32, 33) erzeugt sowie
• eine Steuereinheit (22), mittels derer der motorische Trenneinheit-Vorschubantrieb (12) und der motorische Werkstückträger-Vorschubantrieb (14) derart steuerbar sind, dass sich eine konstante Bearbeitungs-Längsgeschwindigkeit ergibt.

11. Maschinelle Anordnung nach einem der Ansprüche 8 bis 10, **dadurch gekennzeichnet, dass** ein motorischer Trenneinheit-Querantrieb (13) vorgesehen ist, mittels dessen die den Trennstrahl auf das Werkstück (2) richtende Trenneinheit (6) unter trennender Bearbeitung des Werkstücks (2) mittels des Trennstrahls relativ zu dem gemeinschaftlich mit dem Werkstück (2) stationären Werkstückträger (9) mit einer aktiven Trenneinheit-Querbewegung senkrecht zu der Vorschubachse (8) bewegbar ist und der mittels der Antriebssteuerung (17) zur Ausführung der aktiven Trenneinheit-Querbewegung derart steuerbar ist, dass aufgrund der aktiven Trenneinheit-Querbewegung mittels des Trennstrahls an dem Werkstück (2) ein Trennspalt (34, 35) erzeugbar ist, der an dem Werkstück (2) senkrecht zu der Vorschubachse (8) über eine Bearbeitungsbreite verläuft.

12. Maschinelle Anordnung nach Anspruch 11, **dadurch gekennzeichnet, dass** die Antriebssteuerung (16) eine dritte Messeinheit (20) umfasst, mittels derer fortlaufend eine Trenneinheit-Quergeschwindigkeit messbar ist, mit welcher die Trenneinheit (6) bei der aktiven Trenneinheit-Querbewegung relativ zu dem Werkstückträger (9) senkrecht zu der Vorschubachse (8) bewegt wird und dass mittels der Steuereinheit (22) der Antriebssteuerung (17) der motorische Trenneinheit-Vorschubantrieb (12), der motorische Trenneinheit-Querantrieb (13) und der motorische Werkstückträger-Vorschubantrieb (14) derart steuerbar sind, dass sich längs der Vorschubachse (8) und senkrecht zu der Vorschubachse (8) eine konstante Bearbeitungsgeschwindigkeit ergibt, mit welcher der Trennstrahl unter trennender Bearbeitung des Werkstücks (2) an dem Werkstück (2) einen längs der Vorschubachse (8) und einen senkrecht zu der Vorschubachse (8) verlaufenden Trennspalt (32, 33, 34, 35) erzeugt.

13. Computerprogramm zum Betreiben einer maschinellen Anordnung nach einem der Ansprüche 8 bis 12, wobei als Antriebssteuerung (17) des motorischen Vorschubantriebs eine numerische Antriebssteuerung (17) vorgesehen ist, **dadurch gekennzeichnet, dass** das Computerprogramm für die numerische Antriebssteuerung (17) des motorischen Vorschubantriebs Steuerbefehle umfasst, welche bewirken, dass die numerische Antriebssteuerung (17) den motorischen Trenneinheit-Vorschubantrieb (12) des motorischen Vorschubantriebs und den motorischen Werkstückträger-Vorschubantrieb (14) des motorischen Vorschubantriebs derart steuert, dass im Rahmen des Verfahrens nach einem der Ansprüche 1 bis 7
das Werkstück (2) und der auf das Werkstück (2) gerichtete Trennstrahl relativ zueinander senkrecht zu der Strahlrichtung des Trennstrahls längs einer Vorschubachse (8) über eine Bearbeitungslänge (ml**₁**, ml**₂**) bewegt werden und dadurch unter trennender Bearbeitung des Werkstücks (2) mittels des Trennstrahls an dem Werkstück (2) ein Trennspalt (32, 33) erzeugt wird, der längs der Vorschubachse (8) über eine Bearbeitungslänge (ml**₁**, ml**₂**) verläuft, welche größer ist als die maximale Arbeitslänge (wlₘₐₓ) des Trennstrahls,
- indem der Trennstrahl unter trennender Bearbeitung des Werkstücks (2) über eine durch eine maximale Arbeitslänge (wlₘₐₓ) begrenzte Arbeitslänge relativ zu dem das Werkstück (2) lagernden Werkstückträger (9) mit einer aktiven Arbeitsbewegung längs der Vorschubachse (8) bewegt wird und
- indem zusätzlich zu der aktiven Arbeitsbewegung des Trennstrahls längs der Vorschubachse (8) von dem Werkstückträger (9) gemeinschaftlich mit dem von dem Werkstückträger (9) gelagerten Werkstück (2) unter trennender Bearbeitung des Werkstücks (2) eine aktive Arbeitsbewegung längs der Vorschubachse (8) relativ zu dem Trennstrahl ausgeführt wird,
- wobei die aktive Arbeitsbewegung des Werkstückträgers (9) längs der Vorschubachse (8) der aktiven Arbeitsbewegung des Trennstrahls längs der Vorschubachse (8) entgegengerichtet ist,
- wobei die aktive Arbeitsbewegung des Werkstückträgers (9) längs der Vorschubachse (8) wenigstens einem Teil der aktiven Arbeitsbewegung des Trennstrahls längs der Vorschubachse (8) überlagert wird und
- wobei sich der Betrag der aktiven Arbeitsbewegung des Trennstrahls längs der Vorschubachse (8) und der Betrag der aktiven Arbeitsbewegung des Werkstückträgers (9) längs der Vorschubachse (8) zu der die maximale Arbeitslänge (wlₘₐₓ) des Trennstrahls übersteigenden Bearbeitungslänge (ml**₁**, ml**₂**) summieren,
wenn das Computerprogramm auf der numerischen Antriebssteuerung (17) des motorischen Vorschubantriebs abläuft.

## Claims

1. Method for separating a plate-like workpiece (2), in particular a metal sheet, by means of a separating beam,
• the workpiece (2) being supported during the separating by means of a workpiece carrier (9),
• the separating beam being directed onto the workpiece (2) supported by the workpiece carrier (9) in a beam direction perpendicular to a main plane of the workpiece (2) while the workpiece (2) is separated,
• the workpiece (2) and the separating beam directed onto the workpiece (2) being moved relative to each other perpendicular to the beam direction of the separating beam along a feed axis (8) over a processing length (ml₁, ml₂) and thereby, while the workpiece (2) is separated by means of the separating beam, a separating gap (32, 33) being generated on the workpiece (2), which gap extends along the feed axis (8) over the processing length (ml₁, ml**₂**) and
• the separating beam being moved relative to the workpiece carrier (9) which supports the workpiece (2), while the workpiece (2) is separated, with an active working movement along the feed axis (8) over a working length limited by a maximum working length (wlₘₐₓ),
**characterized in that**
by means of the separating beam, a separating gap (32, 33) is generated on the workpiece (2), which gap extends along the feed axis (8) over a processing length (ml₁, ml₂) which is greater than the maximum working length (wlₘₐₓ) of the separating beam, by, in addition to an active working movement of the separating beam along the feed axis (8), an active working movement along the feed axis (8) being carried out by the workpiece carrier (9) together with the workpiece (2) supported by the workpiece carrier (9), relative to the separating beam while the workpiece (2) is separated,
• the active working movement of the workpiece carrier (9) along the feed axis (8) being opposite to the active working movement of the separating beam along the feed axis (8),
• the active working movement of the workpiece carrier (9) along the feed axis (8) being superimposed on at least a part of the active working movement of the separating beam along the feed axis (8) and
• the amount of the active working movement of the separating beam along the feed axis (8) and the amount of the active working movement of the workpiece carrier (9) along the feed axis (8) adding up to the processing length (ml**₁**, ml**₂**) which exceeds the maximum working length (wlₘₐₓ) of the separating beam.

2. Method according to claim 1, **characterized in that** the workpiece (2) is separated by means of the separating beam along the feed axis (8) over a processing length (ml**₃**, ml**₄**) which is not larger than the maximum working length (wlₘₐₓ) of the separating beam, by the separating beam being moved along the feed axis (8) relative to the workpiece carrier (9) which is stationary together with the workpiece (2) along the feed axis (8).

3. Method according to either of the preceding claims, **characterized in that** by means of the separating beam, a separating gap (34, 35) is generated on the workpiece (2), which gap extends perpendicular to the feed axis (8) over a processing width, by the separating beam being moved with an active working transverse movement perpendicular to the feed axis (8) over the processing width relative to the workpiece carrier (9) which is stationary together with the workpiece (2) perpendicular to the feed axis (8).

4. Method according to any of the preceding claims, **characterized in that**
• the separating beam is moved along the feed axis (8) at a separating beam longitudinal speed relative to the workpiece carrier (9) supporting the workpiece (2) during the active working movement of the separating beam along the feed axis (8),
• the workpiece carrier (9) supporting the workpiece is moved along the feed axis (8) at a workpiece carrier longitudinal speed relative to the separating beam during the active working movement of the workpiece carrier (9) along the feed axis (8),
• the separating beam longitudinal speed and the workpiece carrier longitudinal speed are continuously measured,
• from the measured separating beam longitudinal speed and the measured workpiece carrier longitudinal speed, a processing longitudinal speed is continuously determined as a resulting longitudinal speed, at which the separating beam generates a separating gap (32, 33) extending along the feed axis (8) on the workpiece (2) while the workpiece (2) is separated and
• the separating beam longitudinal speed and the workpiece carrier longitudinal speed are controlled in such a way that a constant processing longitudinal speed is obtained.

5. Method according to claim 3 and claim 4, **characterized in that** in addition to the separating beam longitudinal speed and the workpiece carrier longitudinal speed, a separating beam transverse speed is continuously measured, at which the separating beam is moved perpendicular to the feed axis (8) during the active working transverse movement **and in that** the separating beam longitudinal speed, the separating beam transverse speed and the workpiece carrier longitudinal speed are controlled in such a way that a constant processing speed is obtained, at which the separating beam, while the workpiece (2) is separated, generates, on the workpiece (2), a separating gap (32, 33, 34, 35) extending along the feed axis (8) and a separating gap perpendicular to the feed axis (8).

6. Method according to any of the preceding claims, **characterized in that** the workpiece carrier (9) is driven to carry out the active working movement of the workpiece carrier (9) along the feed axis (8) by means of a motorized workpiece carrier feed drive (14) which has two drive motors (15, 16) with drive directions directed opposite to one another along the feed axis (8), one of the drive motors (15, 16) of the motorized workpiece carrier feed drive (14) being operated as a driving drive motor (15, 16) to carry out the active working movement of the workpiece carrier (9) along the feed axis (8) and the other of the drive motors (15, 16) being clamped against the driving drive motor (15, 16).

7. Method according to claim 2 and claim 6, **characterized in that** the workpiece carrier (9) is fixed stationary along the feed axis (8) by means of the motorized workpiece carrier feed drive (14) by the drive motors (15, 16) of the motorized workpiece carrier feed drive (14) being clamped against one another along the feed axis (8).

8. Mechanical arrangement for separating a plate-like workpiece (2), in particular a metal sheet, by means of a separating beam,
• comprising a workpiece carrier (9) for supporting the workpiece (2) during the separation,
• comprising a processing machine (3) having a separating unit (6), by means of which the separating beam can be directed onto the workpiece (2) supported by the workpiece carrier (9) in a beam direction perpendicular to a main plane of the workpiece (2) while the workpiece (2) is separated,
• comprising a motorized feed drive, by means of which the workpiece carrier (9) supporting the workpiece (2) and the separating unit (6) directing the separating beam onto the workpiece (2) are movable relative to each other perpendicular to the beam direction of the separating beam along a feed axis (8) and thereby, while the workpiece (2) is separated, a separating gap (32, 33) can be generated on the workpiece (2) by means of the separating beam, which gap extends along the feed axis (8) over a processing length (ml₁, ml₂),
• the motorized feed drive comprising a motorized separating unit feed drive (12), by means of which the separating unit (6) directing the separating beam onto the workpiece (2) is movable to a limited extent along the feed axis (8) with an active separating unit longitudinal movement relative to the workpiece carrier (9) supporting the workpiece (2) while the workpiece (2) is separated by means of the separating beam, and thereby the separating beam, while the workpiece (2) is separated, is movable with an active working movement along the feed axis (8) over a feed length limited by a maximum working length (wlₘₐₓ) relative to the workpiece carrier (9) supporting the workpiece (2),
**characterized in that**
the motorized feed drive comprises a motorized workpiece carrier feed drive (14), by means of which the workpiece carrier (9) is movable together with the workpiece (2) supported by the workpiece carrier (9) relative to the separating unit (6) directing the separating beam onto the workpiece (2) along the feed axis (8) with an active working movement which is directed opposite to the active separating unit longitudinal movement generated by the motorized separating unit feed drive (12) **and**
**in that** a preferably numerical drive controller (17) is provided, by means of which the motorized separating unit feed drive (12) and the motorized workpiece carrier feed drive (14) are controllable in such a way that the active working movement of the workpiece carrier (9) along the feed axis (8) is superimposed on at least a part of the active separating unit longitudinal movement and that the amount of the active separating unit longitudinal movement and the amount of the active working movement of the workpiece carrier (9) along the feed axis (8) add up to a resulting amount, on the basis of which a separating gap (32, 33) can be generated on the workpiece (2) by means of the separating beam, which gap extends along the feed axis (8) over a processing length (ml**₁**, ml**₂**) which is greater than the maximum working length (wlₘₐₓ) of the separating beam along the feed axis (8).

9. Mechanical arrangement according to claim 8, **characterized in that** by means of the drive controller (17) the motorized separating unit feed drive (12) and the motorized workpiece carrier feed drive (14) can be controlled depending on the processing length, where for a processing length (ml**₃**, ml**₄**) which is not greater than the maximum working length (wlₘₐₓ) of the separating beam along the feed axis (8), the drive controller (17) controls the motorized separating unit feed drive (12) to carry out a separating unit longitudinal movement, but not the motorized workpiece carrier feed drive (14) to carry out an active working movement of the workpiece carrier (9).

10. Mechanical arrangement according to claim 8 or claim 9,
**characterized in that** the drive controller (17) comprises:
• a first measuring unit (18), by means of which a separating unit longitudinal speed can be continuously measured, at which the separating unit (6) is moved along the feed axis (8) relative to the workpiece carrier (9) during the active separating unit longitudinal movement,
• a second measuring unit (19), by means of which a workpiece carrier longitudinal speed can be continuously measured, at which the workpiece carrier (9) is moved along the feed axis (8) relative to the separating unit (6) during the active working movement of the workpiece carrier (9) along the feed axis (8),
• an evaluation unit (21), by means of which a processing longitudinal speed can be continuously determined as a resulting longitudinal speed from the separating unit longitudinal speed and the workpiece carrier longitudinal speed, at which processing longitudinal speed the separating beam generates on the workpiece (2) a separating gap (32, 33) extending along the feed axis (8) while the workpiece (2) is separated, and
• a control unit (22) by means of which the motorized separating unit feed drive (12) and the motorized workpiece carrier feed drive (14) can be controlled in such a way that a constant processing longitudinal speed is obtained.

11. Mechanical arrangement according to any of claims 8 to 10,
**characterized in that** a motorized separating unit transverse drive (13) is provided, by means of which the separating unit (6) directing the separating beam onto the workpiece (2) is movable with an active separating unit transverse movement perpendicular to the feed axis (8) relative to the workpiece carrier (9) which is stationary together with the workpiece (2) while the workpiece (2) is separated by means of the separating beam, and which transverse drive can be controlled by means of the drive controller (17) to carry out the active separating unit transverse movement in such a way that, due to the active separating unit transverse movement, a separating gap (34, 35) can be generated on the workpiece (2) by means of the separating beam, which separating gap extends on the workpiece (2) perpendicular to the feed axis (8) over a processing width.

12. Mechanical arrangement according to claim 11, **characterized in that** the drive controller (16) comprises a third measuring unit (20), by means of which a separating unit transverse speed can be continuously measured, at which the separating unit (6) is moved perpendicular to the feed axis (8) relative to the workpiece carrier (9) during the active separating unit transverse movement **and in that** by means of the control unit (22) of the drive controller (17), the motorized separating unit feed drive (12), the motorized separating unit transverse drive (13) and the motorized workpiece carrier feed drive (14) can be controlled in such a way that a constant processing speed is obtained along the feed axis (8) and perpendicular to the feed axis (8), at which constant processing speed the separating beam, while the workpiece (2) is separated, generates, on the workpiece (2), a separating gap (32, 33, 34, 35) extending along the feed axis (8) and a separating gap perpendicular to the feed axis (8).

13. Computer program for operating a mechanical arrangement according to any of claims 8 to 12, a numerical drive controller (17) being provided as the drive controller (17) of the motorized feed drive, **characterized in that** the computer program comprises control commands for the numerical drive controller (17) of the motorized feed drive which control commands cause the numerical drive controller (17) to control the motorized separating unit feed drive (12) of the motorized feed drive and the motorized workpiece carrier feed drive (14) of the motorized feed drive in such a way that, within the scope of the method according to any of claims 1 to 7
the workpiece (2) and the separating beam directed onto the workpiece (2) are moved relative to each other perpendicular to the beam direction of the separating beam along a feed axis (8) over a processing length (ml₁, ml₂) and thereby, while the workpiece (2) is separated by means of the separating beam, a separating gap (32, 33) is generated on the workpiece (2), which separating gap extends along the feed axis (8) over a processing length (ml₁, ml₂) which is greater than the maximum working length (wlₘₐₓ) of the separating beam,
- by the separating beam, while the workpiece (2) is separated, being moved over a working length limited by a maximum working length (wlₘₐₓ) relative to the workpiece carrier (9) supporting the workpiece (2) with an active working movement along the feed axis (8) and
- by, in addition to the active working movement of the separating beam along the feed axis (8), the workpiece carrier (9) together with the workpiece (2) supported by the workpiece carrier (9) carrying out an active working movement along the feed axis (8) relative to the separating beam while the workpiece (2) is separated,
- the active working movement of the workpiece carrier (9) along the feed axis (8) being opposite along the feed axis (8) to the active working movement of the separating beam,
- the active working movement of the workpiece carrier (9) along the feed axis (8) being superimposed on at least a part of the active working movement of the separating beam along the feed axis (8) and
- the amount of the active working movement of the separating beam along the feed axis (8) and the amount of the active working movement of the workpiece carrier (9) along the feed axis (8) adding up to the processing length (ml₁, ml₂) exceeding the maximum working length (wlₘₐₓ) of the separating beam,
when the computer program runs on the numerical drive controller (17) of the motorized feed drive.

## Revendications

1. Procédé d'usinage, par séparation, d'une pièce d'œuvre (2) en forme de plaque, en particulier d'une tôle, au moyen d'un jet de séparation,
• la pièce d'œuvre (2) étant supportée au moyen d'un porte-pièce (9) lors de l'usinage par séparation,
• le jet de séparation étant dirigé sur la pièce d'œuvre (2) supportée par le porte-pièce (9) dans une direction de jet perpendiculaire à un plan principal de la pièce d'œuvre (2), lors de l'usinage par séparation de la pièce d'œuvre (2),
• la pièce d'œuvre (2) et le jet de séparation dirigé sur la pièce d'œuvre (2) étant déplacés l'un par rapport à l'autre perpendiculairement à la direction de jet du jet de séparation le long d'un axe d'avance (8) sur une longueur d'usinage (ml₁, ml₂) et une fente de séparation (32, 33) s'étendant le long de l'axe d'avance (8) sur la longueur d'usinage (ml₁, ml₂) étant ainsi créée sur la pièce d'œuvre (2) lors de l'usinage par séparation de la pièce d'œuvre (2) au moyen du jet de séparation, et
• le jet de séparation étant déplacé, lors de l'usinage par séparation de la pièce d'œuvre (2), par rapport au porte-pièce (9) supportant la pièce d'œuvre (2) sur une longueur de travail limitée par une longueur de travail maximale (wlₘₐₓ) avec un mouvement de travail actif le long de l'axe d'avance (8),
**caractérisé en ce que**
une fente de séparation (32, 33) s'étendant le long de l'axe d'avance (8) sur une longueur d'usinage (ml₁, ml₂) qui est supérieure à la longueur de travail maximale (wlₘₐₓ) du jet de séparation est créée sur la pièce d'œuvre (2) au moyen du jet de séparation, un mouvement de travail actif le long de l'axe d'avance (8) étant effectué, lors de l'usinage par séparation de la pièce d'œuvre (2), par rapport au jet de séparation par le porte-pièce (9), de manière conjointe avec la pièce d'œuvre (2) supportée par le porte-pièce (9), en plus d'un mouvement de travail actif du jet de séparation le long de l'axe d'avance (8),
• le mouvement de travail actif du porte-pièce (9) le long de l'axe d'avance (8) étant dirigé à l'encontre du mouvement de travail actif du jet de séparation le long de l'axe d'avance (8),
• le mouvement de travail actif du porte-pièce (9) le long de l'axe d'avance (8) étant superposé à au moins une partie du mouvement de travail actif du jet de séparation le long de l'axe d'avance (8) et
• la valeur du mouvement de travail actif du jet de séparation le long de l'axe d'avance (8) et la valeur du mouvement de travail actif du porte-pièce (9) le long de l'axe d'avance (8) s'additionnant pour fournir la longueur d'usinage (ml₁, ml₂) dépassant la longueur de travail maximale (wlₘₐₓ) du jet de séparation.

2. Procédé selon la revendication 1, **caractérisé en ce que** la pièce d'œuvre (2) est usinée par séparation au moyen du jet de séparation le long de l'axe d'avance (8) sur une longueur d'usinage (ml₃, ml₄) qui n'est pas supérieure à la longueur de travail maximale (wlₘₐₓ) du jet de séparation, le jet de séparation étant déplacé le long de l'axe d'avance (8) par rapport au porte-pièce (9) stationnaire le long de l'axe d'avance (8) de manière conjointe avec la pièce d'œuvre (2).

3. Procédé selon l'une quelconque des revendications précédentes, **caractérisé en ce qu'**une fente de séparation (34, 35) s'étendant perpendiculairement à l'axe d'avance (8) sur une largeur d'usinage est créée sur la pièce d'œuvre (2) au moyen du jet de séparation, le jet de séparation étant déplacé sur la largeur d'usinage par rapport au porte-pièce (9) stationnaire perpendiculairement à l'axe d'avance (8) de manière conjointe avec la pièce d'œuvre (2) avec un mouvement transversal de travail actif perpendiculairement à l'axe d'avance (8).

4. Procédé selon l'une quelconque des revendications précédentes, **caractérisé en ce que**
• lors du mouvement de travail actif du jet de séparation le long de l'axe d'avance (8), le jet de séparation est déplacé le long de l'axe d'avance (8) par rapport au porte-pièce (9) supportant la pièce d'œuvre (2) avec une vitesse longitudinale de jet de séparation,
• le porte-pièce (9) supportant la pièce d'œuvre est déplacé le long de l'axe d'avance (8), lors du mouvement de travail actif du porte-pièce (9) le long de l'axe d'avance (8), avec une vitesse longitudinale du porte-pièce par rapport au jet de séparation,
• la vitesse longitudinale de jet de séparation et la vitesse longitudinale de porte-pièce sont mesurées en continu,
• à partir de la vitesse longitudinale de jet de séparation mesurée et de la vitesse longitudinale de porte-pièce mesurée, une vitesse longitudinale d'usinage, avec laquelle le jet de séparation crée sur la pièce d'œuvre (2), lors de l'usinage par séparation de la pièce d'œuvre (2), une fente de séparation (32, 33) s'étendant le long de l'axe d'avance (8), est déterminée en continu en tant que vitesse longitudinale résultante et
• la vitesse longitudinale de jet de séparation et la vitesse longitudinale de porte-pièce sont régulées de manière à obtenir une vitesse longitudinale d'usinage constante.

5. Procédé selon la revendication 3 et la revendication 4, **caractérisé en ce que**, en plus de la vitesse longitudinale de jet de séparation et de la vitesse longitudinale de porte-pièce, une vitesse transversale de jet de séparation, avec laquelle le jet de séparation est déplacé perpendiculairement à l'axe d'avance (8) lors du mouvement transversal de travail actif, est mesurée en continu et **en ce que** la vitesse longitudinale de jet de séparation, la vitesse transversale de jet de séparation et la vitesse longitudinale de porte-pièce sont régulées de telle manière qu'il en résulte une vitesse d'usinage constante, avec laquelle le jet de séparation, lors de l'usinage par séparation de la pièce d'œuvre (2), crée sur la pièce d'œuvre (2) des fentes de séparation (32, 33, 34, 35) s'étendant le long de l'axe d'avance (8) et perpendiculairement à l'axe d'avance (8).

6. Procédé selon l'une quelconque des revendications précédentes, **caractérisé en ce que** le porte-pièce (9) est entraîné au moyen d'un entraînement d'avance motorisé de porte-pièce (14) afin d'exécuter le mouvement de travail actif du porte-pièce (9) le long de l'axe d'avance (8), ledit entraînement d'avance présentant deux moteurs d'entraînement (15, 16) avec des directions d'entraînement opposées l'une à l'autre le long de l'axe d'avance (8), un des moteurs d'entraînement (15, 16) de l'entraînement d'avance motorisé de porte-pièce (14) fonctionnant comme un moteur d'entraînement (15, 16) permettant d'exécuter le mouvement de travail actif du porte-pièce (9) le long de l'axe d'avance (8) et l'autre des moteurs d'entraînement (15, 16) étant contraint contre le moteur d'entraînement (15, 16).

7. Procédé selon la revendication 2 et la revendication 6, **caractérisé en ce que** le porte-pièce (9) est immobilisé de manière stationnaire le long de l'axe d'avance (8) au moyen de l'entraînement d'avance motorisé de porte-pièce (14), les moteurs d'entraînement (15, 16) de l'entraînement d'avance motorisé de porte-pièce (14) étant contraints l'un contre l'autre le long de l'axe d'avance (8).

8. Agencement mécanique permettant l'usinage, par séparation, d'une pièce d'œuvre (2) en forme de plaque, en particulier d'une tôle, au moyen d'un jet de séparation,
• avec un porte-pièce (9) permettant de supporter la pièce d'œuvre (2) lors de l'usinage par séparation,
• avec une machine d'usinage (3) comprenant une unité de séparation (6) au moyen de laquelle le jet de séparation peut, lors de l'usinage par séparation de la pièce d'œuvre (2), être dirigé sur la pièce d'œuvre (2) supportée par le porte-pièce (9) dans une direction de jet s'étendant perpendiculairement à un plan principal de la pièce d'œuvre (2),
• avec un entraînement d'avance motorisé, au moyen duquel le porte-pièce (9) supportant la pièce d'œuvre (2) et l'unité de séparation (6) dirigeant le jet de séparation sur la pièce d'œuvre (2) peuvent être déplacés l'un par rapport à l'autre perpendiculairement à la direction de jet du jet de séparation le long d'un axe d'avance (8) et une fente de séparation (32, 33) s'étendant le long de l'axe d'avance (8) sur une longueur d'usinage (ml₁, ml₂) peut ainsi être créée sur la pièce d'œuvre (2) lors de l'usinage par séparation de la pièce d'œuvre (2) au moyen du jet de séparation,
• l'entraînement d'avance motorisé présentant un entraînement d'avance motorisé d'unité de séparation (12), au moyen duquel l'unité de séparation (6) dirigeant le jet de séparation sur la pièce d'œuvre (2) peut, lors de l'usinage par séparation de la pièce d'œuvre (2) au moyen du jet de séparation, être déplacée de manière limitée par rapport au porte-pièce (9) supportant la pièce d'œuvre (2) le long de l'axe d'avance (8) avec un mouvement longitudinal actif de l'unité de séparation, et le jet de séparation peut ainsi, lors de l'usinage par séparation de la pièce d'œuvre (2), être déplacé sur une longueur de déplacement limitée par une longueur de travail maximale (wlₘₐₓ) le long de l'axe d'avance (8) par rapport au porte-pièce (9) supportant la pièce d'œuvre (2) avec un mouvement de travail actif,
**caractérisé en ce que**
• l'entraînement d'avance motorisé présente un entraînement d'avance motorisé de porte-pièce (14) au moyen duquel le porte-pièce (9) peut être déplacé le long de l'axe d'avance (8), conjointement avec la pièce d'œuvre (2) supportée par le porte-pièce (9), par rapport à l'unité de séparation (6) dirigeant le jet de séparation sur la pièce d'œuvre (2) avec un mouvement de travail actif qui est dirigé à l'encontre du mouvement longitudinal actif d'unité de séparation créé au moyen de l'entraînement d'avance motorisé d'unité de séparation (12) et
• une commande d'entraînement (17), de manière préférée numérique, est prévue, au moyen de laquelle l'entraînement d'avance motorisé d'unité de séparation (12) et l'entraînement d'avance motorisé de porte-pièce (14) peuvent être commandés de telle manière que le mouvement de travail actif du porte-pièce (9) le long de l'axe d'avance (8) est superposé à au moins une partie du mouvement longitudinal actif d'unité de séparation et de telle manière que la valeur du mouvement longitudinal actif d'unité de séparation et la valeur du mouvement de travail actif du porte-pièce (9) le long de l'axe d'avance (8) se complètent pour fournir une valeur résultante grâce à laquelle une fente de séparation (32, 33) s'étendant le long de l'axe d'avance (8) sur une longueur d'usinage (ml₁, ml₂) qui est supérieure à la longueur de travail maximale (wlₘₐₓ) du jet de séparation le long de l'axe d'avance (8) peut être créée sur la pièce d'œuvre (2) au moyen du jet de séparation.

9. Agencement mécanique selon la revendication 8, **caractérisé en ce que** l'entraînement d'avance motorisé d'unité de séparation (12) et l'entraînement d'avance motorisé de porte-pièce (14) peuvent être commandés au moyen de la commande d'entraînement (17) en fonction de la longueur d'usinage de tel manière que, pour une longueur d'usinage (ml₃, ml₄) qui n'est pas supérieure à la longueur de travail maximale (wlₘₐₓ) du jet de séparation le long de l'axe d'avance (8), l'entraînement d'avance motorisé d'unité de séparation (12) est commandé au moyen de la commande d'entraînement (17) permettant d'effectuer un mouvement longitudinal d'unité de séparation, mais pas l'entraînement d'avance motorisé de porte-pièce (14) permettant d'effectuer un mouvement de travail actif du porte-pièce (9).

10. Agencement mécanique selon la revendication 8 ou la revendication 9, **caractérisé en ce que** la commande d'entraînement (17) comprend :
• une première unité de mesure (18) au moyen de laquelle une vitesse longitudinale d'unité de séparation (6), avec laquelle l'unité de séparation (6) est déplacée le long de l'axe d'avance (8) par rapport au porte-pièce (9) lors du mouvement longitudinal actif d'unité de séparation, peut être mesurée en continu,
• une deuxième unité de mesure (19), au moyen de laquelle une vitesse longitudinale de porte-pièce, avec laquelle le porte-pièce (9) est déplacé le long de l'axe d'avance (8) par rapport à l'unité de séparation (6) lors du mouvement de travail actif du porte-pièce (9) le long de l'axe d'avance (8), peut être mesurée en continu,
• une unité d'évaluation (21) au moyen de laquelle une vitesse longitudinale d'usinage, avec laquelle le jet de séparation crée lors de l'usinage par séparation de la pièce d'œuvre (2) sur la pièce d'œuvre (2) une fente de séparation (32, 33) s'étendant le long de l'axe d'avance (8), peut être déterminée en continu en tant que vitesse longitudinale résultante à partir de la vitesse longitudinale d'unité de séparation et de la vitesse longitudinale de porte-pièce et
• une unité de commande (22) au moyen de laquelle l'entraînement d'avance motorisé d'unité de séparation (12) et l'entraînement d'avance motorisé de porte-pièce (14) peuvent être commandés de manière à obtenir une vitesse longitudinale d'usinage constante.

11. Agencement mécanique selon l'une quelconque des revendications 8 à 10, **caractérisé en ce qu'**un entraînement transversal motorisé d'unité de séparation (13) est prévu, au moyen duquel l'unité de séparation (6) dirigeant le jet de séparation sur la pièce d'œuvre (2) peut, lors de l'usinage par séparation de la pièce d'œuvre (2) au moyen du jet de séparation, être déplacée par rapport au porte-pièce (9) stationnaire conjointement avec la pièce d'œuvre (2) avec un mouvement transversal actif d'unité de séparation perpendiculairement à l'axe d'avance (8), et qui peut être commandé au moyen de la commande d'entraînement (17) permettant d'exécuter le mouvement transversal actif d'unité de séparation, de telle manière qu'une fente de séparation (34, 35) s'étendant sur la pièce d'œuvre (2) perpendiculairement à l'axe d'avance (8) sur une largeur d'usinage peut être créée sur la pièce d'œuvre (2) au moyen du jet de séparation grâce au mouvement transversal actif d'unité de séparation.

12. Agencement mécanique selon la revendication 11, **caractérisé en ce que** la commande d'entraînement (16) comprend une troisième unité de mesure (20), au moyen de laquelle une vitesse transversale d'unité de séparation, avec laquelle l'unité de séparation (6) peut être déplacée par rapport au porte-pièce (9) perpendiculairement à l'axe d'avance (8) lors du mouvement transversal actif d'unité de séparation, peut être mesurée en continu, et **en ce que** l'entraînement d'avance motorisé d'unité de séparation (12), l'entraînement transversal motorisé d'unité de séparation motorisée (13) et l'entraînement d'avance motorisé de porte-pièce (14) peuvent être commandés au moyen de l'unité de commande (22) de la commande d'entraînement (17) de manière à obtenir, le long de l'axe d'avance (8) et perpendiculairement à l'axe d'avance (8), une vitesse d'usinage constante avec laquelle le jet de séparation crée sur la pièce d'œuvre (2) une fente de séparation (32, 33, 34, 35) s'étendant le long de l'axe d'avance (8) et une fente de séparation (32, 33, 34, 35) s'étendant perpendiculairement à l'axe d'avance (8) lors de l'usinage par séparation de la pièce d'œuvre (2).

13. Programme informatique permettant de faire fonctionner un agencement mécanique selon l'une quelconque des revendications 8 à 12, une commande d'entraînement numérique (17) étant prévue en tant que commande d'entraînement (17) de l'entraînement d'avance motorisé, **caractérisé en ce que** le programme informatique comprend des commandes pour la commande d'entraînement numérique (17) de l'entraînement d'avance motorisé, les commandes faisant que la commande d'entraînement numérique (17) commande l'entraînement d'avance motorisé d'unité de séparation (12) de l'entraînement d'avance motorisé et l'entraînement d'avance motorisé de porte-pièce (14) de l'entraînement d'avance motorisée de telle manière que, dans le cadre du procédé selon l'une quelconque des revendications 1 à 7,
la pièce d'œuvre (2) et le jet de séparation dirigé sur la pièce d'œuvre (2) sont déplacés l'un par rapport à l'autre perpendiculairement à la direction de jet du jet de séparation le long d'un axe d'avance (8) sur une longueur d'usinage (ml₁, ml 2) et une fente de séparation (32, 33) s'étendant le long de l'axe d'avance (8) sur une longueur d'usinage (ml₁, ml₂) qui est supérieure à la longueur de travail maximale (wlₘₐₓ) du jet de séparation est ainsi créée sur la pièce d'œuvre lors de l'usinage par séparation de la pièce d'œuvre (2) au moyen du jet de séparation (2),
- le jet de séparation étant déplacé, lors de l'usinage par séparation de la pièce d'œuvre (2), par rapport au porte-pièce (9) supportant la pièce d'œuvre (2) sur une longueur de travail limitée par une longueur de travail maximale (wlₘₐₓ) avec un mouvement de travail actif le long de l'axe d'avance (8) et
- un mouvement de travail actif le long de l'axe d'avance (8) par rapport au jet de séparation étant effectué par le porte-pièce (9), lors de l'usinage par séparation de la pièce d'œuvre (2), conjointement avec la pièce d'œuvre (2) supportée par le porte-pièce (9) en plus du mouvement de travail actif du jet de séparation le long de l'axe d'avance (8),
- le mouvement de travail actif du porte-pièce (9) le long de l'axe d'avance (8) étant dirigé à l'encontre du mouvement de travail actif du jet de séparation le long de l'axe d'avance (8),
- le mouvement de travail actif du porte-pièce (9) le long de l'axe d'avance (8) étant superposé à au moins une partie du mouvement de travail actif du jet de séparation le long de l'axe d'avance (8) et
- la valeur du mouvement de travail actif du jet de séparation le long de l'axe d'avance (8) et la valeur du mouvement de travail actif du porte-pièce (9) le long de l'axe d'avance (8) s'additionnant pour fournir la longueur d'usinage (ml₁, ml₂) dépassant la longueur de travail maximale (wlₘₐₓ) du jet de séparation.
lorsque le programme informatique est exécuté sur la commande d'entraînement numérique (17) de l'entraînement d'avance motorisé.
